# FASCICULE DE BREVET EUROPEEN

(11) **EP 1 796 891 B1**
(45) Date de publication et mention de la délivrance du brevet: **06.08.2008**
(21) Numéro de dépôt: 05800616.4
(22) Date de dépôt: 26.09.2005
(51) Int. Cl.: B29C 45/14, B29C 45/34, B29C 33/00, B29C 33/10, B29C 45/26

(54) **PROCEDE ET DISPOSITIF DE FABRICATION D'UN BOYAU PROFILE.**
VERFAHREN UND VORRICHTUNG ZUR HERSTELLUNG EINER PROFILIERTEN STANGE
METHOD AND DEVICE FOR PRODUCING A PROFILED BAR

(30) Priorité: 27.09.2004 FR 0452163
(43) Date de publication de la demande: 20.06.2007
(73) Titulaire: Saint-Gobain Glass France S.A., 92400 Courbevoie (FR)
(72) Inventeur: ORTEGAT, Cyrille, F-60130 Erquinvillers (FR); LECLERCQ, Guy, F-60170 Cambronne Les Ribecourt (FR)
(74) Mandataire: Jamet, Vincent
(86) Numéro de dépôt international: PCT/FR2005/050781
(87) Numéro de publication internationale: WO 2006/035180

(56) Documents cités:
- EP-A- 0 845 340
- EP-A- 0 978 369
- US-A- 5 464 575
- PATENT ABSTRACTS OF JAPAN vol. 017, no. 410 (M-1455), 30 juillet 1993 (1993-07-30) -& JP 05 084778 A (NISSAN MOTOR CO LTD), 6 avril 1993 (1993-04-06)
- PATENT ABSTRACTS OF JAPAN vol. 1995, no. 11, 26 décembre 1995 (1995-12-26) & JP 07 195574 A (HASHIMOTO FORMING IND CO LTD), 1 août 1995 (1995-08-01)

## Description

La présente invention se rapporte à un procédé de fabrication d'un boyau profilé en un matériau polymère sur un vitrage par encapsulation, ledit procédé comportant une étape de moulage après mise en contact d'au moins un élément de moulage avec ledit vitrage par l'intermédiaire d'au moins un système de joint d'étanchéité, ainsi qu'à un dispositif pour la mise en oeuvre de ce procédé et au vitrage obtenu par la mise en oeuvre de ce procédé.

Elle concerne plus particulièrement la réalisation des évents qui permettent d'évacuer l'air présent dans les éléments de moulage pendant le moulage par encapsulation d'un profilé en un matériau polymère et permettant ainsi une répartition homogène du polymère moulé dans l'élément de moulage. Par encapsulation au sens de la présente invention il faut entendre la mise en oeuvre d'une technique d'injection de matière dans un système de moule fermé, étant entendu que le profilé peut être formé sur tout ou partie de la périphérie du vitrage, ou sur une partie quelconque du vitrage.

En effet, en l'absence d'au moins un évent, le polymère moulé par encapsulation risque de présenter un profilé ne correspondant pas exactement à l'empreinte inverse des éléments de moulage ou risque de présenter des aspérités ou des bulles.

Il est ainsi connu dans l'art antérieur de réaliser des fuites contrôlées d'air, notamment au niveau du plan de joint des éléments de moulage, mais ces fuites d'air sont souvent accompagnées de fuites de matières. Ce surplus de matière doit par la suite être enlevé lors d'une opération d'ébavurage qui engendre une perte de temps importante et nécessite beaucoup de main d'oeuvre car elle ne peut que difficilement être automatisée. Il n'est pas envisageable de laisser cette matière car le plan de joint des éléments de moulage est toujours à proximité du chant du vitrage et cette matière serait alors visible lors du montage du vitrage dans la baie qu'il doit fermer.

Il est, par ailleurs connu de réaliser une carotte-évent en provoquant l'évacuation de l'air et du surplus de matière dans un volume particulier du moule, voire dans la cavité même de moulage comme dans le document JP 05084778, mais cette carotte doit être ensuite supprimée du moule avant le moulage du boyau suivant. Cette opération engendre également une perte de temps et nécessite également de la main d'oeuvre car elle ne peut que difficilement être automatisée.

Il est également connu dans l'art antérieur de disposer sur le vitrage une bande de matière adhérant au vitrage et d'opérer un évent au niveau de cette bande afin que le surplus de matière se dépose sur cette bande et soit par la suite plus facile à enlever. Toutefois, cette solution engendre également une perte de temps pour le collage et le décollage de la bande adhésive et nécessite également de la main d'oeuvre car elle ne peut que difficilement être automatisée. Il est aussi fait réference au document EP-A-845 340.

Le but de l'invention est de pallier les inconvénients de l'art antérieur en proposant un procédé qui permette de réaliser au moins un évent sans engendrer de perte de temps ou au moins en réduisant les pertes de temps, tant au niveau du moulage qu'au niveau de la finition postérieure. Grâce au procédé selon l'invention, l'opération d'encapsulation peut être plus facilement automatisée et la réalisation des évents en elle-même n'engendre plus ni perte de temps, ni opération manuelle supplémentaire d'ébavurage.

La présente invention se rapporte ainsi dans son acception la plus large à un procédé de fabrication d'un boyau profilé en un matériau polymère sur un vitrage par encapsulation, ledit procédé comportant une étape de moulage après mise en contact d'au moins un élément de moulage avec ledit vitrage par l'intermédiaire d'au moins un système de joint d'étanchéité, caractérisé en ce que l'on réalise au moins un évent à l'intérieur dudit système de joint d'étanchéité.

Cet évent peut être à une extrémité en contact direct avec l'atmosphère extérieur à la cavité de moulage dans laquelle le boyau profilé est formé ou peut constituer une simple cavité fermée pour l'accueil de l'air pendant le moulage, l'air étant alors comprimé dans cette cavité par la progression de la matière à l'intérieur de la cavité de moulage ; toutefois, selon l'invention, l'évent est réalisé à l'intérieur même du système de joint d'étanchéité, en contact avec le vitrage ; il n'est donc pas réalisé à l'intérieur de la cavité de moulage.

Cet évent (ou ces évents) est (ou sont) réalisé(s), de préférence, entre une pluralité de lèvres du système de joint d'étanchéité dont l'une au moins est interrompue et/ou comporte au moins un trou et/ou est plus souple qu'au moins une autre.

Lorsqu'un évent est réalisé entre plusieurs lèvres, deux lèvres au moins sont de préférence sensiblement parallèles ou coaxiales.

Préalablement au moulage du boyau, chaque zone du vitrage dans laquelle un évent est réalisé est, de préférence, préparée afin qu'un surplus de matière se formant au niveau d'un évent adhère au vitrage. Cette adhésion est, de préférence, identique à celle du boyau sur le vitrage.

Cette préparation peut se faire soit par dépôt d'un primaire d'accrochage, soit par dépôt d'une bande adhésive.

Une caractéristique particulière du procédé selon l'invention consiste en ce que les paramètres de réalisation dudit boyau sont constants dans une série de fabrication, c'est-à-dire que l'injection est opérée à volume ou poids constant et à pression identique d'un boyau à l'autre. Il n'est donc plus nécessaire, comme auparavant, de procéder au cours d'une série de fabrication (même vitrage, même boyau) à des réglages de quantité ou de pression de matière à injecter notamment lorsque des écarts dimensionnels se manifestent au niveau des vitrages. Ces écarts sont maintenant sans conséquence sur le boyau lui-même. Ils provoquent juste une bavure plus ou moins grande au niveau de l'évent ou de chaque évent.

Ce surplus de matière formé au niveau d'un évent ou au niveau de chaque évent n'est pas retiré postérieurement à la fabrication du boyau, avant livraison au client ou avant montage dans la baie qu'il va fermer.

Lorsque le procédé selon l'invention est mis en oeuvre pour la réalisation d'un boyau sur un vitrage destiné à être monté sur un véhicule quelconque et en particulier un véhicule automobile, ledit vitrage présentant au moins partiellement une bande d'ornementation du type bande de matière colorée rapportée (émail) ou bande de matière colorée intégrée dans le substrat, l'évent (ou les évents) est (ou sont) réalisé(s) au moins partiellement, et de préférence totalement, derrière ladite couche d'ornementation lorsque l'on regarde de l'extérieur du véhicule vers l'intérieur. Ainsi, la matière en surplus s'échappant par cet (ou ces) évent(s), sera cachée de l'extérieur du véhicule, au moins partiellement et de préférence totalement, par la bande d'ornementation. Cette matière sera en outre en général également cachée de l'intérieur du véhicule par des montants d'ornementation.

Dans cette hypothèse également, préalablement au moulage du boyau, au moins un insert de renfort ou de fixation peut être positionné dans un élément de moulage afin que le boyau formé postérieurement intègre cet insert au moins.

La présente invention se rapporte également à un dispositif pour la fabrication d'un boyau profilé en un matériau polymère sur un vitrage par encapsulation, ledit dispositif comportant au moins un élément de moulage mis en contact avec ledit vitrage par l'intermédiaire d'au moins un système de joint d'étanchéité, caractérisé en ce que ledit système de joint d'étanchéité comporte des moyens pour la réalisation d'au moins un évent à l'intérieur dudit système de joint d'étanchéité.

Dans le dispositif selon l'invention, ledit système de joint d'étanchéité comporte, de préférence, au moins un joint annulaire ou une pluralité de portions de joint formant un anneau, ledit système présentant ainsi un axe A.

Lesdits moyens pour la réalisation d'au moins un évent sont, de préférence, constitués d'une pluralité de lèvres dont l'une au moins est interrompue et/ou comporte au moins un trou et/ou est plus souple qu'au moins une autre.

Cette lèvre interrompue et/ou comportant au moins un trou et/ou plus souple qu'au moins une autre est, de préférence, située la plus proche dudit boyau par rapport à (aux) l'autre(s) lèvre(s).

Lorsque lesdits moyens pour la réalisation d'au moins un évent sont constitués d'une pluralité de lèvres, de préférence au moins deux lèvres sont sensiblement parallèles ou coaxiales lorsqu'elles sont annulaires.

Ledit système de joint d'étanchéité comporte, de préférence, au moins une gorge, qui est annulaire lorsque le système de joint d'étanchéité est annulaire, cette gorge présentant en coupe transversale par exemple une forme de V ou de U dont l'ouverture est orientée vers le vitrage. C'est dans cette gorge que l'évent est réalisé, c'est-à-dire que c'est dans cette gorge que l'air chassé par la matière injectée dans la cavité de moulage va se comprimer et que le surplus de matière va s'épandre et adhérer au vitrage.

Lorsque le vitrage présente au moins partiellement une bande d'ornementation, lesdits moyens pour la réalisation d'au moins un évent sont positionnés, de préférence, au moins partiellement derrière ladite bande d'ornementation lors de l'injection, pour pouvoir réaliser un surplus de matière au moins partiellement et de préférence totalement derrière la bande d'ornementation, lorsque l'on regarde de l'extérieur du véhicule vers l'intérieur.

Lesdits moyens pour la réalisation d'au moins un évent sont, de préférence, positionnés à l'opposée d'au moins une (ou de chaque) buse d'injection par laquelle la matière constitutive du boyau est injectée dans ledit élément de moulage au moins. Par « à l'opposé » on entend :
- lorsque la buse est positionnée à une extrémité longitudinale d'une cavité de moulage longitudinale, l'opposé désigne une autre extrémité longitudinale ;
- lorsque la buse est positionnée au milieu d'une cavité de moulage longitudinale, l'opposé désigne une extrémité longitudinale ;
- lorsque la cavité de moulage est annulaire, l'opposé désigne une position environ à 180° de la buse selon l'axe de l'anneau.

Le boyau du vitrage ainsi réalisé comporte ainsi lors de sa livraison au client et par conséquent aussi lors et après son montage dans la baie qu'il vient fermer, au moins un surplus de matière correspondant à l'endroit où a été réalisé ledit évent au moins.

Dans le cas d'un vitrage pour véhicule, ce surplus de matière est positionné, de préférence, sur une face du vitrage destinée à être orientée puis effectivement orientée après montage du vitrage dans la baie vers l'intérieur du véhicule.

Dans le cas d'un vitrage pour véhicule également, lorsque ledit vitrage présente au moins partiellement une bande d'ornementation du type bande de matière colorée rapportée (émail) ou bande de matière colorée intégrée dans le substrat, ledit surplus de matière est positionné au moins partiellement derrière ladite bande d'ornementation, et de préférence complètement derrière cette bande, lorsque l'on regarde de l'extérieur du véhicule vers l'intérieur.

Dans le cas d'un vitrage pour véhicule également, le boyau peut comporter au moins un insert, voire plusieurs inserts, pour la fixation du vitrage ou son renforcement ou pour la fixation d'accessoires.

Dans le cas notamment d'un vitrage qui ne présente que partiellement une couche d'ornementation, c'est-à-dire pas sur toute la surface du vitrage munie d'un boyau, ledit surplus de matière peut être positionné au moins partiellement derrière un parement lorsque l'on regarde de l'intérieur du véhicule vers l'extérieur.

Par vitrage, il faut entendre tout panneau de verre ou de matière plastique, monolithique ou multiple, c'est-à-dire formé d'une ou de plusieurs feuilles de matière.

Une utilisation de ce vitrage peut être réalisée pour fermer une baie et en particulier une baie de carrosserie de véhicule et particulièrement de véhicule automobile.

Cette utilisation est réalisée sans enlèvement préalable du (ou des) surplus de matière formé(s) au niveau du (ou des) évent(s).

Avantageusement, la présente invention permet ainsi de réaliser une (ou plusieurs) zone(s) d'éventation contrôlée dans une (ou plusieurs) zone(s) du vitrage choisie(s) spécifiquement et qui sera (ou seront) pas ou peu visible(s) sur le vitrage une fois installé.

Avantageusement également, l'évent (ou les évents) est (ou sont) ainsi réalisé(s) sur une face du vitrage, dans un élément guidant le surplus de matière, à l'intérieur même d'un joint d'étanchéité.

Le surplus de matière engendré par chaque évent peut ainsi être caché derrière une bande d'ornementation et n'affecte alors pas les caractéristiques esthétiques du vitrage.

Il peut également être caché derrière un parement, notamment lorsque aucune bande d'ornementation n'est prévue.

Ce surplus de matière n'affecte pas non plus les caractéristiques mécaniques du boyau car il adhère au vitrage de la même manière que le boyau.

Ainsi, le surplus de matière peut être laissé sur le vitrage et il n'est alors pas nécessaire de l'enlever avant livraison au client et avant montage dans la baie qu'il doit fermer.

Du temps est économisé avant le moulage car il n'est pas nécessaire de réaliser une opération particulière de préparation de l'évent : il suffit de préparer la zone du vitrage près de laquelle est situé l'évent de la même manière que la zone du vitrage sur laquelle doit adhérer le boyau.

Du temps est économisé également après le moulage car il n'est pas nécessaire d'opérer un quelconque ébavurage.

Avantageusement également, le procédé selon l'invention est compatible avec toutes les matières utilisées habituellement pour la mise en oeuvre des techniques d'encapsulation.

La présente invention sera mieux comprise à la lecture de la description détaillée ci-après d'exemples de réalisation non limitatifs et des figures ci-jointes :
- La figure 1 illustre une vue de dessous simplifiée d'un dispositif de moulage selon l'invention, sur un vitrage orienté horizontalement, la vue étant réalisée au niveau de la surface inférieure du vitrage ;
- La figure 2 illustre une vue en coupe selon B-B' de la figure 1 ; et
- La figure 3 illustre une vue en coupe selon C-C' de la figure 1.

Il est précisé que les proportions entre les divers éléments représentés ne sont pas rigoureusement respectées dans ces figures afin d'en faciliter la lecture.

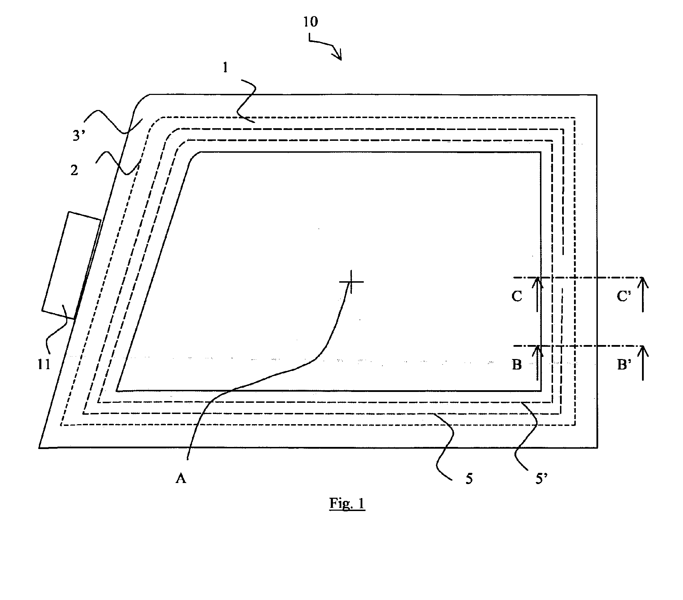

La figure 1 illustre un vitrage (2) sur lequel on réalise un boyau (1) profilé en un matériau polymère.

Le matériau polymère constitutif du boyau (1) peut être un thermoplastique (PVC, TPE, ...), un polyuréthanne ou encore un caoutchouc synthétique du type EPDM ou toute autre matière adéquate.

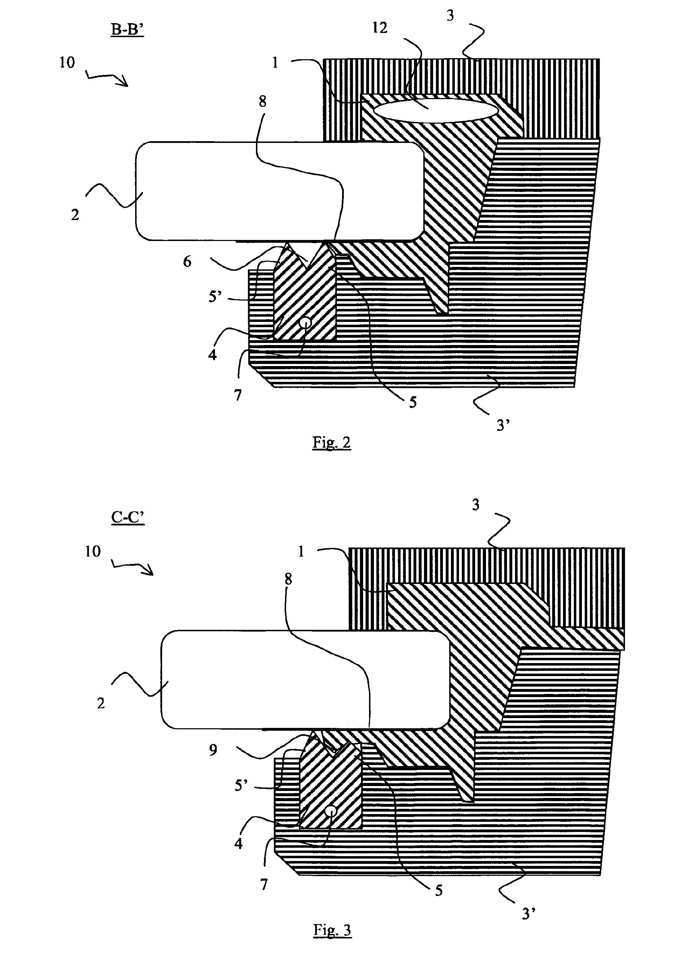

Le procédé de fabrication du boyau (1) est appelé « encapsulation » car il comporte une étape de moulage du boyau (1) dans un dispositif de moulage (10), entre deux éléments de moulage, un élément de moulage supérieur (3) et un élément de moulage inférieur (3'), comme on peut le voir sur la figure 2.

Sur les figures, le boyau (1) est disposé sur toute la périphérie du vitrage (2) mais ce boyau pourrait tout à fait n'être positionné que sur une partie de la périphérie du vitrage ou sur une partie quelconque du vitrage.

Chaque élément de moulage est refermé sur le vitrage (2) grâce à un système de joint d'étanchéité (4) ; toutefois, pour plus de clarté, seul le système de joint d'étanchéité (4) de l'élément de moulage inférieur (3') a été représenté.

Ce sont ces systèmes de joint d'étanchéité qui permettent de maintenir une pression suffisante à l'intérieur du moule pendant l'injection de la matière polymère.

Ces systèmes de joint d'étanchéité permettent également, dans une certaine mesure, de « rattraper » les tolérances de fabrication du vitrage, c'est-à-dire de compenser les écarts pouvant subvenir avec les côtes nominales du vitrage dans le moule.

Chaque système de joint d'étanchéité constitue un joint annulaire, positionné à la périphérie du vitrage et présente un axe A, orienté ici verticalement car l'injection est opérée sur un vitrage positionné horizontalement ; toutefois, l'axe A peut également être orienté horizontalement si l'injection est opérée sur un vitrage positionné verticalement, ou est être orienté de toute autre manière.

Selon l'invention, pour permettre à l'air de s'échapper de l'empreinte de moulage des éléments de moulage refermés sur le vitrage lors de l'injection de la matière constitutive du boyau, on réalise au moins un évent à l'intérieur dudit système de joint d'étanchéité (4).

Il est rappelé ici que la pression d'injection avoisine souvent quelques bars à quelques dizaines de bars, notamment pour les PU-RIM, mais elle peut également atteindre quelques centaines de bars, notamment pour les résines PVC (poly(chlorure de vinyle)).

Bien sûr, cet (ou ces) évent(s) permet(tent) également à une petite quantité de matière en surplus de s'échapper de l'empreinte de moulage du boyau sans pour autant quitter l'enceinte étanche et plus particulièrement l'enceinte délimitée par le système de joint d'étanchéité (4) dans sa totalité. Le surplus de matière (9) s'échappant ainsi dans l'évent est illustré sur la figure 3.

Pour ce faire, le système de joint d'étanchéité (4) de l'élément de moulage inférieur (3') comporte des moyens pour la réalisation d'au moins un évent à l'intérieur dudit système de joint d'étanchéité (4). Ce sont ces moyens qui vont guider le surplus de matière (9) afin qu'il s'épande là où on le désire, à l'intérieur même du système de joint d'étanchéité (4).

Ces moyens peuvent être issus d'une opération supplémentaire réalisée après fabrication du joint d'étanchéité, notamment lorsque le joint d'étanchéité est extrudé, ou peuvent être issus de l'opération même de fabrication du joint d'étanchéité, notamment lorsque le joint d'étanchéité est fabriqué par moulage.

Le système de joint d'étanchéité (4) peut être fabriqué, par exemple, en silicone.

Dans la version de l'invention illustrée ici, les moyens pour la réalisation d'au moins un évent sont constitués d'une pluralité de lèvres (5, 5') parallèles, et plus précisément coaxiales car le système de joint d'étanchéité (4) est annulaire, dont l'une, la lèvre (5) située axialement la plus proche dudit boyau (1), est interrompue : elle présente une portion qui n'est plus en contact avec le vitrage, par laquelle l'air chassé par la matière injectée passe dans le système de joint d'étanchéité (4) et par laquelle le surplus de matière passe également dans le système de joint d'étanchéité (4).

Dans une variante, on aurait également pu munir cette lèvre extérieure d'au moins un trou ou d'une pluralité de trous pour le passage de l'air et du surplus de matière.

Dans la version de l'invention illustrée ici, les lèvres (5, 5') ont une section sensiblement triangulaire et se rejoignent à leur base. Une gorge (6), annulaire, en forme de V, est ainsi formée entre les deux lèvres (5, 5'). Il est toutefois possible d'imaginer d'autres sections pour la gorge (6), notamment en U. Il est aussi possible que le fond de la gorge soit en contact directement ou indirectement (par l'intermédiaire d'un clapet ou d'un filtre) avec l'atmosphère extérieure au moule.

Il est également possible de ne réaliser la gorge (6) que sur une partie du système de joint d'étanchéité comportant des moyens pour la réalisation d'au moins un évent, là où l'évent (ou les évents) doit (doivent) être réalisé(s). Ainsi, la section de la gorge peut être maximale au niveau de l'interruption de la lèvre axialement la plus proche dudit boyau (1) et/ou au niveau des trous formés dans cette lèvre axialement la plus proche dudit boyau (1), puis diminuer jusqu'à devenir nulle en s'éloignant de cette interruption et/ou de ces trous, au bout de quelques centimètres.

Par ailleurs, dans la version de l'invention illustrée ici, les lèvres (5, 5') constituent des prolongements verticaux supérieurs du système de joint d'étanchéité (4) de l'élément de moulage inférieur (3'), mais il est tout à fait possible de réaliser les deux lèvres (5, 5') complètement indépendantes. Dans cette dernière variante particulièrement, il est préférable de réaliser la lèvre (5) située axialement la plus proche dudit boyau (1) plus souple que l'autre, afin de faciliter le passage de l'air et du surplus de matière (9) dans la gorge (6) située entre les deux lèvres et d'empêcher cet air et ce surplus de matière de s'échapper du système de joint d'étanchéité (4).

Un trou (7) de section transversale cylindrique peut en outre être réalisé tout le long ou le long d'une partie seulement du système de joint d'étanchéité (4) afin de faciliter la déformation de ce dernier tout en assurant l'étanchéité souhaitée.

Comme on peut le voir sur la figure 1, l'évent est, de préférence, positionné à l'opposé de la buse d'injection (11) par laquelle la matière constitutive du boyau (1) est injectée dans le moule. Plus précisément, le boyau étant annulaire et sensiblement symétrique selon son axe, l'évent est positionné sensiblement à l'opposé de la zone d'injection de la matière, là où les flux arrivant de chaque côté se rencontrent. Il peut également être préférable de réaliser plusieurs évents même lorsqu'une seule buse d'injection est utilisée, notamment lorsque la cavité du moule s'étend sur une grande longueur.

Préalablement au moulage du boyau (1), chaque zone du vitrage (2) dans laquelle un évent est réalisé est préparée afin que le surplus de matière (9) adhère au vitrage (2) comme le boyau (1) adhère au vitrage (2).

Le vitrage (2) est de préférence au moins partiellement transparent et peut être un vitrage monolithique, c'est-à-dire constitué d'une feuille de matière unique, ou être un vitrage multiple, c'est-à-dire constitué de plusieurs feuilles de matière entre lesquelles est inséré au moins une couche de matière adhérente dans le cas des vitrages feuilletés, ou au moins un espace intercalaire dans le cas des double-vitrages. Les feuilles de matière peuvent être minérales, notamment en verre, ou organique, notamment en matière plastique.

Dans le cas d'un vitrage pour véhicule, le vitrage présente généralement au moins partiellement à sa périphérie une bande d'ornementation (8). Cette bande d'ornementation résulte en général d'un dépôt d'émail, réalisé sur la face intérieure du vitrage ou sur une face intercalaire du vitrage pour les vitrages composites, mais elle peut également résulter d'une coloration partielle et/ou périphérique d'une feuille de matière utilisée, notamment d'une feuille en matière organique. Dans ce cas, l'évent (ou les évents) est (ou sont) réalisé(s) derrière ladite bande d'ornementation (8), afin que le surplus de matière (9) soit caché par la bande d'ornementation (8). Pour ce faire, les moyens pour la réalisation d'au moins un évent sont positionnés au moins partiellement sous ladite bande d'ornementation (8) car le vitrage est positionné horizontalement et le boyau (1) est réalisé essentiellement sous le vitrage (2) dans la version illustrée.

Le surplus de matière (9) est ainsi réalisé sur la face du vitrage destinée à être orientée vers l'intérieur du véhicule.

Les évents pourraient également être réalisés en d'autres endroits que sous la bande d'ornementation : dans des zones du vitrage qui une fois le vitrage monté seront cachées.

Dans le cas d'un vitrage pour véhicule également, il est possible de positionner un (ou plusieurs) insert(s) (12) dans l'élément de moulage (3, 3') préalablement au moulage du boyau (1), afin que le boyau intègre cet (ou ces) insert(s).

Cet (ou ces) insert(s) peut (ou peuvent) être un (ou des) insert(s) de renfort, généralement complètement intégré au boyau (1), comme on peut le voir sur la figure 2, ou être un (ou des) insert(s) de fixation, généralement proéminent(s), pour la fixation du vitrage ou d'un accessoire.

Le vitrage (2) tel qu'on peut le voir sur les figures 2 et 3, présentant un boyau (1) profilé en un matériau polymère et un surplus de matière (9) correspondant à l'endroit où a été réalisé l'évent, est ensuite livré tel quel au client après être sorti du moule. Aucune opération d'ébavurage n'est réalisée en sortie de moule avant la livraison au client et avant le montage dans la baie.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Procédé de fabrication d'un boyau (1) profilé en un matériau polymère sur un vitrage (2) par encapsulation, ledit procédé comportant une étape de moulage après mise en contact d'au moins un élément de moulage (3, 3') avec ledit vitrage (2) par l'intermédiaire d'au moins un système de joint d'étanchéité (4), **caractérisé en ce que** l'on réalise au moins un évent à l'intérieur dudit système de joint d'étanchéité (4).

2. Procédé selon la revendication précédente, **caractérisé en ce que** l'évent est réalisé entre une pluralité de lèvres (5, 5') dont l'une au moins est interrompue et/ou comporte au moins un trou et/ou est plus souple qu'au moins une autre.

3. Procédé selon la revendication précédente, **caractérisé en ce qu'**au moins deux lèvres (5, 5') sont sensiblement parallèles ou coaxiales.

4. Procédé selon l'une quelconque des revendications précédentes, **caractérisé en ce que** ledit vitrage (2) présentant au moins partiellement une bande d'ornementation (8), l'évent est réalisé au moins partiellement derrière ladite bande d'ornementation (8).

5. Procédé selon l'une quelconque des revendications précédentes, **caractérisé en ce que** les paramètres de réalisation dudit boyau (1) sont constants dans une série de fabrication.

6. Procédé selon l'une quelconque des revendications précédentes, **caractérisé en ce que** préalablement au moulage du boyau (1), chaque zone du vitrage (2) dans laquelle un évent est réalisé est préparée afin qu'un surplus de matière (9) se formant au niveau d'un évent adhère au vitrage (2).

7. Procédé selon l'une quelconque des revendications précédentes, **caractérisé en ce qu'**un surplus de matière (9) formé au niveau d'un évent n'est pas retiré postérieurement à la fabrication du boyau (1).

8. Procédé selon l'une quelconque des revendications précédentes, **caractérisé en ce que** préalablement au moulage du boyau (1), au moins un insert (12) est positionné dans un élément de moulage (3, 3').

9. Dispositif (10) pour la fabrication d'un boyau (1) profilé en un matériau polymère sur un vitrage (2) par encapsulation, ledit dispositif comportant au moins un élément de moulage (3, 3') mis en contact avec ledit vitrage (2) par l'intermédiaire d'au moins un système de joint d'étanchéité (4), **caractérisé en ce que** ledit système de joint d'étanchéité (4) comporte des moyens pour la réalisation d'au moins un évent à l'intérieur dudit système de joint d'étanchéité (4).

10. Dispositif (10) selon la revendication précédente, **caractérisé en ce que** ledit système de joint d'étanchéité (4) comporte au moins un joint annulaire ou une pluralité de portions de joint formant un anneau.

11. Dispositif (10) selon la revendication 9 ou la revendication 10, **caractérisé en ce que** lesdits moyens pour la réalisation d'au moins un évent sont constitués d'une pluralité de lèvres (5, 5') dont l'une au moins est interrompue et/ou comporte au moins un trou et/ou est plus souple qu'au moins une autre.

12. Dispositif (10) selon la revendication précédente, **caractérisé en ce que** ladite lèvre (5) interrompue et/ou comportant au moins un trou et/ou plus souple qu'au moins une autre est située la plus proche dudit boyau (1).

13. Dispositif (10) selon l'une quelconque des revendications 11 ou 12, **caractérisé en ce qu'**au moins deux lèvres (5, 5') sont sensiblement parallèles ou coaxiales.

14. Dispositif (10) selon l'une quelconque des revendications 9 à 13, **caractérisé en ce que** ledit système de joint d'étanchéité (4) comporte au moins une gorge (6).

15. Dispositif (10) selon l'une quelconque des revendications 9 à 14, **caractérisé en ce que** ledit vitrage (2) présentant au moins partiellement une bande d'ornementation (8), lesdits moyens pour la réalisation d'au moins un évent sont positionnés au moins partiellement derrière ladite bande d'ornementation (8).

16. Dispositif (10) selon l'une quelconque des revendications 9 à 15, **caractérisé en ce que** lesdits moyens pour la réalisation d'au moins un évent sont positionnés à l'opposé d'au moins une buse d'injection (11) par laquelle la matière constitutive du boyau (1) est injectée dans ledit élément de moulage (3, 3') au moins.

## Claims

1. Method for manufacturing a profiled flexible bead (1) in a polymer material on a glazing (2) by encapsulation, the said method comprising a step of moulding, having brought at least one moulding element (3, 3') into contact with the said glazing (2) by means of at least one sealing system (4), **characterized in that** at least one vent is formed inside the said sealing system (4).

2. Method according to the preceding claim, **characterized in that** the vent is formed between a plurality of lips (5, 5') at least one of which is interrupted and/or has at least one hole and/or is more supple than at least one other.

3. Method according to the preceding claim, **characterized in that** at least two lips (5, 5') are more or less parallel or coaxial.

4. Method according to any one of the preceding claims, **characterized in that** with the said glazing (2) at least partially having a decorative strip (8), the vent is produced at least partially behind the said decorative strip (8).

5. Method according to any one of the preceding claims, **characterized in that** the production parameters for the said flexible bead (1) are constant throughout a production run.

6. Method according to any one of the preceding claims, **characterized in that** prior to moulding the flexible bead (1), each zone of the glazing (2) in which a vent is produced is prepared so that any excess material (9) that forms in the region of a vent adheres to the glazing (2).

7. Method according to any one of the preceding claims, **characterized in that** any excess material (9) formed in the region of a vent is not removed after the manufacturing of the profiled flexible bead (1).

8. Method according to any one of the preceding claims, **characterized in that** prior to moulding the flexible bead (1), at least one insert (12) is positioned in a moulding element (3, 3').

9. Device (10) for manufacturing a profiled flexible bead (1) made of a polymer material on a glazing (2) by encapsulation, the said device comprising at least one moulding element (3, 3') brought into contact with the said glazing (2) by means of at least one sealing system (4), **characterized in that** the said sealing system (4) comprises means for producing at least one vent within the said sealing system (4).

10. Device (10) according to the preceding claim, **characterized in that** the said sealing system (4) comprises at least one annular seal or a plurality of seal portions forming an annulus.

11. Device (10) according to Claim 9 or Claim 10, **characterized in that** the said means for producing at least one vent consist of a plurality of lips (5, 5') at least one of which is interrupted and/or has at least one hole and/or is more supple than at least one other.

12. Device (10) according to the preceding claim, **characterized in that** the said lip (5) that is interrupted and/or has at least one hole and/or is more supple than at least one other is situated closest to the said flexible bead (1).

13. Device (10) according to either one of Claims 11 and 12, **characterized in that** at least two lips (5, 5') are more or less parallel or coaxial.

14. Device (10) according to any one of Claims 9 to 13, **characterized in that** the said sealing system (4) comprises at least one groove (6).

15. Device (10) according to any one of Claims 9 to 14, **characterized in that** with the said glazing (2) at least partially having a decorative strip (8), the said means for producing at least one vent are at least partially positioned behind the said decorative strip (8).

16. Device (10) according to any one of Claims 9 to 15, **characterized in that** the said means for producing at least one vent are positioned at a location opposed with respect to at least one injection nozzle (11) via which the material that forms the flexible bead (1) is injected into the said moulding element (3, 3') at least.

## Patentansprüche

1. Verfahren zur Herstellung eines Profilschlauchs (1) aus einem polymeren Material auf einer Verglasung (2) durch Ummantelung, das eine Formgebungsstufe nach In-Berührung-Bringen mindestens eines Formgebungselements (3, 3') mit der Verglasung (2) über mindestens ein Dichtungssystem (4) umfasst, **dadurch gekennzeichnet, dass** in dem Dichtungssystem (4) mindestens eine Entlüftungsöffnung angebracht wird.

2. Verfahren nach dem vorhergehenden Anspruch, **dadurch gekennzeichnet, dass** die Entlüftungsöffnung zwischen einer Vielzahl von Lippen (5, 5') realisiert wird, wovon mindestens eine unterbrochen ist und/oder mindestens ein Loch enthält und/oder nachgiebiger als mindestens eine weitere ist.

3. Verfahren nach dem vorhergehenden Anspruch, **dadurch gekennzeichnet, dass** mindestens zwei Lippen (5, 5') im Wesentlichen parallel oder koaxial sind.

4. Verfahren nach einem der vorhergehenden Ansprüche, **dadurch gekennzeichnet, dass** die Verglasung (2) wenigstens teilweise ein Verzierungsband (8) aufweist, wobei die Entlüftungsöffnung wenigstens teilweise hinter diesem Verzierungsband (8) angebracht wird.

5. Verfahren nach einem der vorhergehenden Ansprüche, **dadurch gekennzeichnet, dass** die Parameter der Herstellung des Schlauchs (1) in einer Produktionsserie konstant sind.

6. Verfahren nach einem der vorhergehenden Ansprüche, **dadurch gekennzeichnet, dass** vor der Aufformung des Schlauchs (1) jeder Bereich der Verglasung (2), in welchem eine Entlüftungsöffnung angebracht wird, vorbereitet wird, damit sich an einer auf der Verglasung (2) befindlichen Entlüftungsöffnung ein Materialüberschuss (9) bildet.

7. Verfahren nach einem der vorhergehenden Ansprüche, **dadurch gekennzeichnet, dass** ein Materialüberschuss (9), der an einer Entlüftungsöffnung gebildet worden ist, nach der Herstellung des Schlauchs (1) nicht entfernt wird.

8. Verfahren nach einem der vorhergehenden Ansprüche, **dadurch gekennzeichnet, dass** vor der Aufformung des Schlauchs (1) mindestens ein Einsatz (12) in einem Formgebungselement (3, 3') angeordnet wird.

9. Vorrichtung (10) zur Herstellung eines Profilschlauchs (1) aus einem Polymermaterial auf einer Verglasung (2) durch Ummantelung, wobei die Vorrichtung mindestens ein Formgebungselement (3, 3') umfasst, das sich mit der Verglasung (2) über mindestens ein Dichtungssystem (4) in Berührung befindet, **dadurch gekennzeichnet, dass** das Dichtungssystem (4) Mittel zur Erzeugung mindestens einer Entlüftungsöffnung in diesem Dichtungssystem (4) umfasst.

10. Vorrichtung (10) nach dem vorhergehenden Anspruch, **dadurch gekennzeichnet, dass** das Dichtungssystem (4) mindestens eine Ringdichtung oder eine Vielzahl von einen Ring bildenden Dichtungsteilen umfasst.

11. Vorrichtung (10) nach Anspruch 9 oder 10, **dadurch gekennzeichnet, dass** die Mittel zur Erzeugung mindestens einer Entlüftungsöffnung von einer Vielzahl von Lippen (5, 5') gebildet werden, wovon mindestens eine unterbrochen ist und/oder mindestens ein Loch enthält und/oder nachgiebiger als mindestens eine weitere ist.

12. Vorrichtung (10) nach dem vorhergehenden Anspruch, **dadurch gekennzeichnet, dass** die Lippe (5) unterbrochen ist und/oder mindestens ein Loch enthält und/oder nachgiebiger als mindestens eine andere ist, die sich dem Schlauch (1) am nächsten befindet.

13. Vorrichtung (10) nach Anspruch 11 oder 12, **dadurch gekennzeichnet, dass** mindestens zwei Lippen (5, 5') im Wesentlichen parallel oder koaxial sind.

14. Vorrichtung (10) nach einem der Ansprüche 9 bis 13, **dadurch gekennzeichnet, dass** das Dichtungssystem (4) mindestens eine Nut (6) enthält.

15. Vorrichtung (10) nach einem der Ansprüche 9 bis 14, **dadurch gekennzeichnet, dass** die Verglasung (2) wenigstens teilweise ein Verzierungsband (8) aufweist, wobei die Mittel zur Erzeugung mindestens einer Entlüftungsöffnung wenigstens teilweise hinter dem Verzierungsband (8) angeordnet sind.

16. Vorrichtung (10) nach einem der Ansprüche 9 bis 15, **dadurch gekennzeichnet, dass** die Mittel zur Erzeugung mindestens einer Entlüftungsöffnung entgegengesetzt zu mindestens einer Einspritzdüse (11) angeordnet sind, durch welche das den Schlauch (1) bildende Material in wenigstens das Formgebungselement (3, 3') gespritzt wird.
